# EUROPÄISCHE PATENTSCHRIFT

(11) **EP 1 897 659 B1**
(45) Veröffentlichungstag und Bekanntmachung des Hinweises auf die Patenterteilung: **03.09.2008**
(21) Anmeldenummer: 06018645.9
(22) Anmeldetag: 06.09.2006
(51) Int. Cl.: B25B 27/14, F16B 37/12

(54) **Verfahren zum Einbauen eines gewindepanzernden Elementes in ein Aufnahmegewinde sowie Einbauspindel und gewindepanzerndes Element hierfür**
Method of mounting a threaded insert in a receiving thread and mounting spindle and threaded insert therefor
Procédé pour monter un insert taraudé dans un taraudage de réception ainsi que broche de montage et insert taraudé

(43) Veröffentlichungstag der Anmeldung: 12.03.2008
(73) Patentinhaber: Bofag Fastener AG, 8021 Zürich (CH)
(72) Erfinder: Tovar, Francisco, 33659 Bielefeld (DE); Grubert, Klaus-Friedrich, 13765 Bückeburg (DE)
(74) Vertreter: Hauck Patent- und Rechtsanwälte

(56) Entgegenhaltungen:
- FR-A- 2 715 341
- US-A- 2 363 663
- US-A- 2 594 900
- US-A1- 2005 095 083

## Beschreibung

Die vorliegende Erfindung betrifft ein Verfahren zum Einbauen eines gewindepanzernden Elementes in ein Aufnahmegewinde eines Bauteils sowie eine Einbauspindel und ein gewindepanzemdes Element hierfür.

Herkömmliche gewindepanzernde Elemente in Form eines wendelförmig gewickelten Drahtes dienen zum Verstärken des Aufnahmegewindes von Bauteilen aus Materialien relativ geringer Festigkeit. Zu diesem Zweck wird das gewindepanzernde Element in dem Aufnahmegewinde montiert, worauf dann die Schraube in das gewindepanzernde Element eingedreht werden kann.

Zum Einbringen des gewindepanzernden Elementes in das Aufnahmegewinde sind zwei Montagearten üblich. Bei der einen Montageart ist der wendelförmige Draht mit einer Mitnahme-Kerbe versehen, über die ein Spezialwerkzeug den wendelförmigen Draht mitschleppt und in das Aufnahmegewinde eindreht, vgl. zum Beispiel US 4,563,119, US 4,645,398, US 4,553,303, etc. Bei der anderen Montageart ist der wendelförmige Draht an einem Ende mit einem diagonal verlaufenden Mitnahme-Zapfen versehen, über den wiederum ein Spezialwerkzeug den wendelförmigen Draht mitschleppt und hierdurch in das Aufnahmegewinde eindreht, vgl. zum Beispiel US 2,152,681, US 2,363,663, etc. Die Mitnahme-Kerbe resultiert in einer Querschnittsänderung des Drahtes, was den Wickelprozess schwieriger macht. Der Mitnahme-Zapfen hat den Nachteil, dass er nach der Montage gebrochen und entfernt werden muss. In jedem Fall ist ein aufwendiges und kostspieliges Spezialwerkzeug zum Einbringen des wendelförmigen Drahtes in das Aufnahmegewinde erforderlich.

Aus US 2005/0095083A1, das die Merkmale der Oberbegriffe der Ansprüche 1 und 7 offenbart, sind ein Verfahren und eine Schraube zum Einbauen eines gewindepanzernden Elementes in Form einer Drahtwendel in ein Aufnahmegewinde eines Bauteils bekannt, das folgende Schritte aufweist:
Bereitstellen einer Drahtwendel, deren Geometrie an das Aufnahmegewinde des Bauteils angepasst ist,
Bereitstellen einer Schraube mit einem Gewinde, das passend zur Geometrie der Drahtwendel ausgebildet ist,
Festlegen der Drahtwendel auf der Schraube durch einen Kraftschluss, der größer ist als das zum Einbauen der Drahtwendel in das Aufnahmegewinde erforderliche Drehmoment,
wobei die Drahtwendel mindestens einen Endbereich hat, dessen Innendurchmesser gegenüber demjenigen des übrigen Bereichs der Drahtwendel so weit reduziert ist, dass er kleiner als der Durchmesser der Schraube ist, um den für den Einbau der Drahtwendel erforderlichen Kraftschluss zu erzeugen,
Einschrauben der Schraube mit der darauf festgelegten Drahtwendel in das Aufnahmegewinde,

Entfernen der Schraube aus der Drahtwendel durch Drehen der Schraube entgegen der Einschraubrichtung.

Der vorliegenden Erfindung liegt die Aufgabe zugrunde, ein Verfahren zum Einbauen eines gewindepanzernden Elementes in Form einer Drahtwendel in ein Aufnahmegewinde eines Bauteils anzugeben, welches die Verwerdung eines extrem einfachen Einbauwerkzeugs sowie kostengünstig herstellbarer Drahtwendeln ermöglicht und auf einfache Weise durchführbar ist. Ferner sollen eine Einbauspindel und eine Drahtwendel zum Durchführen des Verfahrens geschaffen werden.

Das erfindungsgemäße Verfahren ist in Anspruch 1 definiert. Eine Einbauspindel zum Durchführen des Verfahrens sind in Anspruch 7 definiert.

Bei dem erfindungsgemäßen Verfahren wird ein Einbauwerkzeug in Form einer Einbauspindel mit einem Gewinde verwendet, das an die Geometrie der Drahtwendel angepasst ist. Die Drahtwendel wird auf dem Einbauwerkzeug durch einen Kraftschluss festgelegt, der größer als das zum Einbauen der Drahtwendel in das Aufnahmegewinde erforderliche Drehmoment ist. Die Einbauspindel mit der darauf festgelegten Drahtwendel wird dann in das Aufnahmegewinde des Bauteils eingeschraubt. Anschließend wird die Einbauspindel entgegen der Einschraubrichtung gedreht, um die Einbauspindel aus der Drahtwendel zu entfernen.

Der Kraftschluss wird dadurch erzeugt, dass die Drahtwendel mindestens einen Endbereich hat, dessen Innendurchmesser gegenüber demjenigen des übrigen Bereichs der Drahtwendel soweit reduziert ist, dass er kleiner als der Durchmesser der Einbauspindel ist. Hierdurch ergibt sich eine Art Schlingfedereffekt, der ein problemloses Einbauen der Drahtwendel und ein problemloses Entfernen der Einbauspindel ermöglicht. Grundsätzlich ist auch denkbar, die Drahtwendel mit zwei durchmesserverringerten Endbereichen zu versehen, so dass dann die Drahtwendel "bidirektional" verwendbar wäre.

Bei dem erfindungsgemäßen Verfahren wird ein extrem einfaches Einbauwerkzeug verwendet, das lediglich aus einem Gewindekörper besteht und keinerlei komplizierte Mitnahmemerkmale wie die Spezialwerkzeuge des Standes der Technik erfordert. Die bei dem erfindungsgemäßen Verfahren verwendete Drahtwendel lässt sich besonders einfach herstellen, da kein Anformen eines Mitnahme-Zapfens bzw. kein Stanzen von Mitnahme-Kerben erforderlich ist. Die im Stand der Technik vorgesehenen Mitnahme-Kerben schwächen nicht nur die Drahtwendel, sondern erschweren auch den Wickelprozess. Ferner ist kein Zapfenbrechen und Zapfenentfernen erforderlich, was den Einbau vereinfacht und besonders vorteilhaft in der Gewindereparatur und in der Serie ist. Für die Gewindereparatur steht somit ein kostengünstiges gewindepanzerndes Element ohne Zapfen zur Verfügung.

Vorteilhafte Weiterbildungen und Ausgestaltungen der Erfindung sind in den abhängigen Ansprüchen definiert.

Anhand der Zeichnungen wird ein Ausführungsbeispiel der Erfindung erläutert. Es zeigt:
Fig. 1 eine Seitenansicht eines gewindepanzernden Elementes in Form einer Drahtwendel;
Fig. 2 eine Endansicht der Drahtwendel in Fig. 1 in Blickrichtung des Pfeils X;
Fig. 3 eine perspektivische Ansicht einer Einbauspindel mit einer darauf festgelegten Drahtwendel;
Fig. 4 eine schematische Darstellung einer Einbauspindel mit einer darauf festgelegten Drahtwendel vor dem Einbau in das Aufnahmegewinde eines Bauteils;
Fig. 5 eine der Fig. 4 entsprechende Ansicht nach dem Einbau der Drahtwendel in das Aufnahmegewinde.

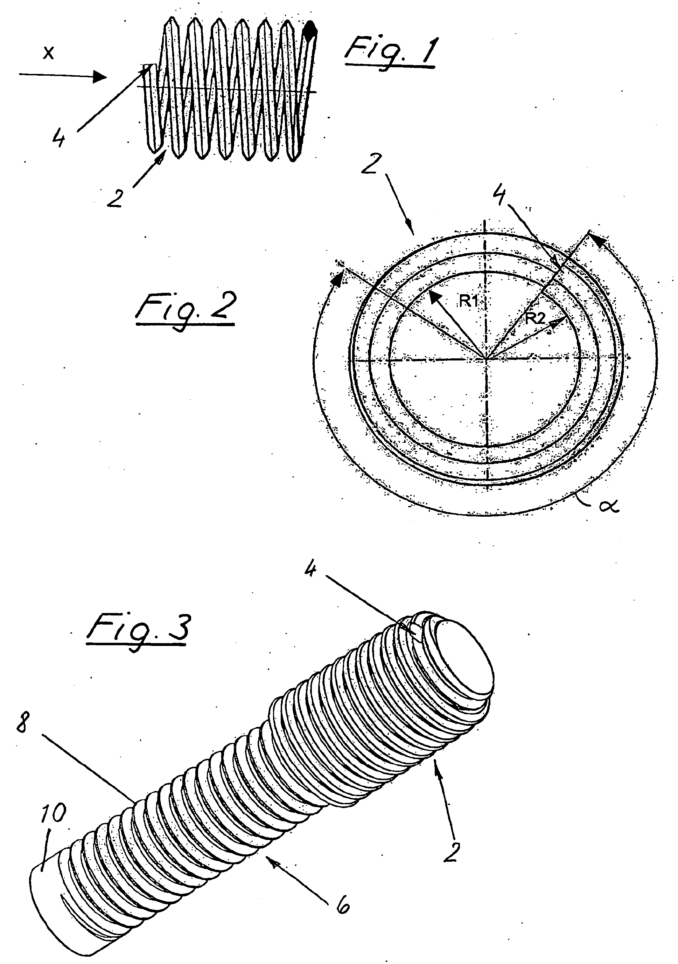

Fig. 1 zeigt ein gewindepanzerndes Element in Form einer Drahtwendel 2, die als Schraubenfeder ausgeführt ist. Im dargestellten Ausführungsbeispiel hat die Drahtwendel 2 einen diamantförmigen Querschnitt; es sind jedoch auch beliebig andere Querschnittsformen möglich. Die Drahtwendel 2 besteht aus einem Federstahl oder einem anderen elastischen Werkstoff hoher Festigkeit.

Die Drahtwendel 2 hat einen Endabschnitt 4, dessen Innendurchmesser gegenüber demjenigen des übrigen Bereichs der Drahtwendel reduziert ist. Wie in Fig. 2 dargestellt ist, verläuft der Endabschnitt 4 von einem Radius R 1 kontinuierlich zu einem Radius R2, wobei der Radius R2 der Innenradius am Ende des Endbereiches 4 und der Radius R1 der Innenradius des übrigen Bereichs der Drahtwendel 2 ist. Die Durchmesserverringerung des Endbereiches 4 kann durch eine Spirale oder durch aufeinanderfolgende Kreisbögen unterschiedlicher Radien gebildet werden und erstreckt sich in Umfangsrichtung über einen Winkel α. Der Winkel α liegt vorzugsweise zwischen 360° und 720°, kann aber auch kleiner oder größer gewählt werden. Gemäß einer bevorzugten Ausführungsform wird der Endbereich 4 von einer einzigen Windung gebildet, so dass der Winkel α in der Größenordnung von 360° liegt.

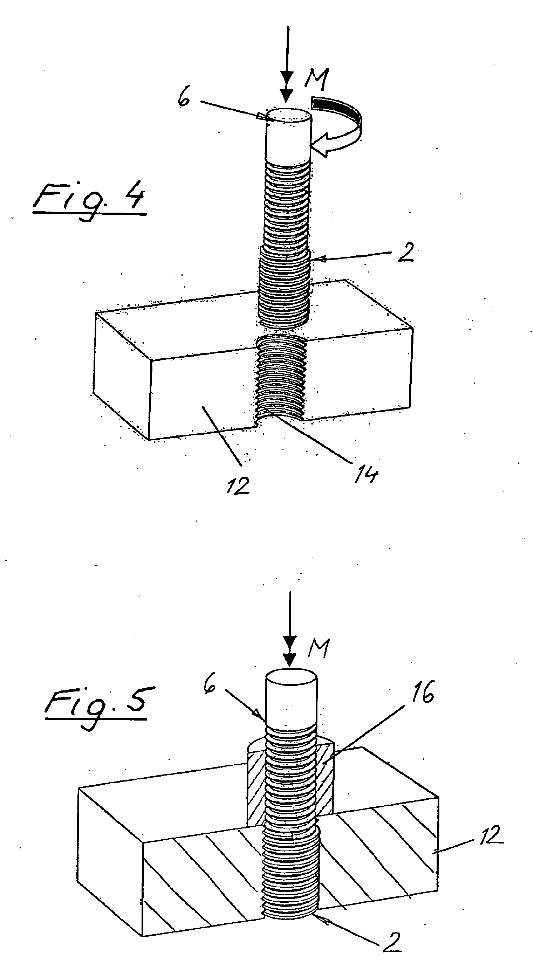

Zum Einbauen der Drahtwendel 2 in ein Aufnahmegewinde eines Bauteils (Fig. 4, 5) dient das in Fig. 3 dargestellte Einbauwerkzeug in Form einer Einbauspindel 6. Die Einbauspindel 6 besteht aus einem Gewindekörper 8 mit einem Außengewinde und einem Antriebsmerkmal 10. Das Antriebsmerkmal 10 ist im dargestellten Ausführungsbeispiel ein Rundschaft, wie er für Spannfutter (nicht gezeigt) verwendet werden kann. Es sind jedoch auch beliebig andere Antriebsmerkmale möglich, beispielsweise ein Vierkant oder Sechskant für den Einsatz als Handwerkzeug, ein genormter Vielkant für maschinelle Schraubwerkzeuge, etc.

Das Gewinde der Einbauspindel 6 ist so dimensioniert, dass der Durchmesser der Einbauspindel größer als der Innendurchmesser des Endbereiches 4 der Drahtwendel 2 ist. Der Durchmesserunterschied zwischen der Drahtwendel 2 und der Einbauspindel 6 wird so gewählt, dass die Drahtwendel 2 auf dem Einbauwerkzeug 8 durch einen Kraftschluss festgelegt wird, der größer ist als das Drehmoment, das zum Einschrauben der Drahtwendel 2 in das Aufnahmegewinde erforderlich ist. Es entsteht somit eine Art Schlingfedereffekt, der einen extrem einfachen Einbau der Drahtwendel in das Aufnahmegewinde erlaubt, wie nun genauer erläutert wird.

Im dargestellten Ausführungsbeispiel hat das Gewinde der Einbauspindel 6 einen über ihrer Länge konstanten Durchmesser. Denkbar ist auch, den Durchmesser der Einbauspindel im Bereich des durchmesserverringerten Endbereiches 4 der Drahtwendel 2 etwas zu vergrößern, so dass der Kraftschluss und damit der Schlingfedereffekt durch eine Kombination aus einer Durchmesserverringerung der Drahtwendel und einer Durchmesservergrößerung der Einbauspindel erzielt wird.

Für den Einbauvorgang wird zunächst die Einbauspindel 6 von der dem Endbereich 4 gegenüberliegenden Ende her in die Drahtwendel 2 eingeschraubt. Dies kann manuell oder mittels eines einfachen Montagewerkzeuges (nicht gezeigt) erfolgen. Wenn das Einbauwerkzeug 6 soweit in die Drahtwendel eingeschraubt ist, dass der durchmesserverringerte Endbereich 4 auf der Einbauspindel 6 sitzt, wird der erwähnte Schlingfedereffekt wirksam. Die Einbauspindel 6 kann so gestaltet sein, dass der Schlingfedereffekt an den Gewindeflanken oder/und Gewindespitzen von Einbauspindel 6 und Drahtwendel 2 wirksam ist.

Die Einbauspindel 6 mit der darauf kraftschlüssig festgelegten Drahtwendel 2 wird, wie in den Figuren 4 und 5 durch Pfeile M angedeutet ist, durch einen einfachen Drehvorgang mit dem erforderlichen Drehmoment in das Aufnahmegewinde 14 des Bauteils 2 eingeschraubt.

Um dies zu ermöglichen ist das Aufnahmegewinde 14 passend zur Geometrie der Drahtwendel 2 ausgebildet. Die Drahtwendel 2 hat im nicht eingebauten Zustand einen Außendurchmesser, der größer als der Innendurchmesser des Aufnahmegewindes 14 ist, um einen Festsitz der Drahtwendel 2 im Aufnahmegewinde 14 sicherzustellen. Die Drahtwendel 2 umgibt somit - vor dem Einbau - die Einbauspindel 6 mit Spiel, abgesehen von dem durchmesserverringerten Endbereich 4, der für den erforderlichen Kraftschluss zwischen dem Einbauwerkzeug 6 und der Drahtwendel 2 sorgt.

Die Einbautiefe der Drahtwendel 2 im Aufnahmegewinde 14 kann visuell überwacht werden. Im dargestellten Ausführungsbeispiel ist die Einbauspindel 2 mit einem Tiefenanschlag 16 ausgerüstet, der mittels eines Innengewindes auf der Einbauspindel 6 verstellbar gelagert ist und durch eine Verkonterung (nicht gezeigt) in der jeweils gewünschten Lage auf der Einbauspindel 14 festlegbar ist. Der Tiefenanschlag 16 ermöglicht somit die Einhaltung einer gewünschten Einbautiefe, was beispielsweise in einer Serienmontage dazu genutzt werden kann, eine konstante Einbautiefe für sämtliche Drahtwendeln sicherzustellen.

Wenn das Einbauwerkzeug 6 mit der darauf festgelegten Drahtwendel 2 die gewünschte Einbautiefe erreicht hat, wird die Drehrichtung der Einbauspindel 6 umgekehrt. Hierdurch wird der Schlingfedereffekt zwischen der Einbauspindel 6 und dem durchmesserverringerten Endbereich 4 der Drahtwendel 2 aufgehoben. Die Einbauspindel 6 wird somit aus der Drahtwendel 2 herausgedreht, während die Drahtwendel 2 im Aufnahmegewinde 14 des Bauteils 2 verbleibt.

Zweckmäßigerweise wird der Durchmesser der Einbauspindel 6 etwas größer gewählt als derjenige einer Normschraube (z. B. ISO-Norm) mit im Wesentlichen gleichen Abmessungen, und zwar um soviel, dass die Einbauspindel gerade noch in das zugehörige genormte Aufnahmegewinde schraubbar ist. Der Gewindekörper 8 der Einbauspindel 6 hat dann einen etwas größeren Durchmesser als die Normschraube (nicht gezeigt). Der durchmesserverringerte Endbereich 4 der Drahtwendel 2 kann daher so groß gemacht werden, dass die Normschraube in die eingebaute Drahtwendel einschraubbar ist.

Es sei darauf hingewiesen, dass die Drahtwendel in bekannter Weise mit einem schraubenklemmenden Bereich in Form einer oder mehrerer polygon geformter Windungen versehen werden kann, die nach Eindrehen der Schraube in die Drahtwendel als Schraubenverliersicherung dient.

## Patentansprüche

1. Verfahren zum Einbauen eines gewindepanzernden Elementes in Form einer Drahtwendel in ein Aufnahmegewinde eines Bauteils, das folgende Schritte aufweist:
a) Bereitstellen einer Drahtwendel (2), deren Geometrie an das Aufnahmegewinde (14) des Bauteils (2) angepasst ist,
b) Bereitstellen einer Einbauspindel (6) mit einem Gewinde, das passend zu der Geometrie der Drahtwendel (2) ausgebildet ist,
c) Festlegen der Drahtwendel (2) auf der Einbauspindel (6) durch einen Kraftschluss, der größer ist als das zum Einbauen der Drahtwendel in das Aufnahmegewinde erforderliche Drehmoment,
d) Einschrauben der Einbauspindel (6) mit der darauf festgelegten Drahtwendel (2) in das Aufnahmegewinde (14),
e) Entfernen der Einbauspindel (6) aus der Drahtwendel (2) durch Drehen der Einbauspindel entgegen der Einschraubrichtung,
wobei die Drahtwendel (2) mindestens einen Endbereich (4) hat, dessen Innendurchmesser gegenüber demjenigen des übrigen Bereichs der Drahtwendel (2) soweit reduziert ist, dass er kleiner als der Durchmesser der Einbauspindel (6) ist, um den für den Einbau der Drahtwendel (2) erforderlichen Kraftschluss zu erzeugen, und **dadurch gekennzeicknet**, daß
der Durchmesser der Einbauspindel (6) etwas größer als derjenige der Normschraube mit im Wesentlichen gleichen Abmessungen ist, welche für den Einbau in die Drahtwendel vorgesehen ist, und der durchmesserverringerte Endbereich (4) der Drahtwendel (2) einen Innendurchmesser hat, der groß genug ist, um die Normschraube in die eingebaute Drahtwendel (2) einschrauben zu können.

2. Verfahren nach Anspruch 1, **dadurch gekennzeichnet, dass** der durchmesserreduzierte Endbereich (4) der Drahtwendel (2) sich über einen Winkel (α) von 360° bis 720° erstreckt.

3. Verfahren nach Anspruch 1 oder 2, **dadurch gekennzeichnet, dass** der Kraftschluss zwischen der Einbauspindel (6) und der Drahtwendel (2) an deren Gewindeflanken oder/und Gewindespitzen wirksam ist.

4. Verfahren nach einem der vorhergehenden Ansprüche, **dadurch gekennzeichnet, dass** die Drahtwendel (2) im nicht eingebauten Zustand einen Außendurchmesser hat, der größer als der Innendurchmesser des Aufnahmegewindes (14) des Bauteils (12) ist, um einen Festsitz der Drahtwendel (2) im Aufnahmegewinde (14) sicherzustellen.

5. Verfahren nach einem der vorhergehenden Ansprüche, **dadurch gekennzeichnet, dass** die Einbauspindel (6) mit einem Antriebsmerkmal (10) versehen ist.

6. Verfahren nach einem der vorhergehenden Ansprüche, **dadurch gekennzeichnet, dass** die Einbauspindel (6) mit einem verstellbaren Tiefenanschlag (16) versehen ist, durch den die Einbautiefe der Drahtwendel (2) im Aufnahmegewinde (14) festlegbar ist.

7. Einbauspindel und Drahtwendel zum Einbauen der Drahtwendel in ein Aufnahmegewinde eines Bauteils, von denen die Einbauspindel (6) einen Spindelkörper (8) mit einem Gewinde aufweist, das an die Geometrie der Drahtwendel (2) angepasst ist, und die Drahtwendel (2) einen Endbereich (4) hat, dessen Innendurchmesser gegenüber demjenigen des übrigen Bereichs der Drahtwendel (2) soweit reduziert ist, dass er kleiner als der Durchmesser der Einbauspindel (6) ist, um die Drahtwendel (2) auf der Einbauspindel (6) durch einen vorgegebenen Kraftschluss festzulegen,
wobei die Drahtwendel (2) mindestens einen Endbereich (4) hat, dessen Innendurchmesser gegenüber demjenigen des übrigen Bereichs der Drahtwendel (2) soweit reduziert ist, dass er kleiner als der Durchmesser der Einbauspindel (6) ist, um den für den Einbau der Drahtwendel (2) erforderlichen Kraftschluss zu erzeugen, und **dadurch gekennzeichnet, daß** der Durchmesser der Einbauspindel (6) etwas größer als derjenige der Normschraube mit im Wesentlichen gleichen Abmessungen ist, welche für den Einbau in die Drahtwendel vorgesehen ist, und der durchmesserverringerte Endbereich (4) der Drahtwendel (2) einen Innendurchmesser hat, der groß genug ist, um die Normschraube in die eingebaute Drahtwendel (2) einschrauben zu können.

## Claims

1. Method of mounting a threaded insert in the form of a helical wire into a receiving thread of a component which comprises the following steps:
a) providing a helical wire (2), the geometry thereof being adapted to the receiving thread (14) of the component (2),
b) providing a mounting spindle (6) having a thread which is configured to be adapted to the geometry of the helical wire (2),
c) fixing the helical wire (2) onto the mounting spindle (6) by a frictional connection which is greater than the torque required for mounting the helical wire into the receiving thread,
d) screwing the mounting spindle (6) with the helical wire (2) fixed thereto into the receiving thread (14),
e) removing the mounting spindle (6) from the helical wire (2) by rotating the mounting spindle counter to the direction of screwing,
the helical wire (2) having at least one end region (4), the internal diameter thereof being reduced relative to that of the remaining region of the helical wire (2), such that it is smaller than the diameter of the mounting spindle (6), in order to produce the frictional connection required for mounting the helical wire (2), and **characterised in that**
the diameter of the mounting spindle (6) is slightly greater than that of a standard screw of substantially similar dimensions which is provided for mounting in the helical wire, and the end region (4) of reduced diameter of the helical wire (2) has an internal diameter which is sufficiently great in order to be able to screw the standard screw into the mounted helical wire (2).

2. Method according to Claim 1, **characterised in that** the end region (4) of reduced diameter of the helical wire (2) extends over an angle (α) of 360° to 720°.

3. Method according to Claim 1 or 2, **characterised in that** the frictional connection between the mounting spindle (6) and the helical wire (2) is effective at the flanks and/or tips of the threads thereof.

4. Method according to one of the preceding claims, **characterised in that** the helical wire (2) has an external diameter in the unmounted state which is greater than the internal diameter of the receiving thread (14) of the component (12) in order to ensure an interference fit of the helical wire (2) in the receiving thread (14).

5. Method according to one of the preceding claims, **characterised in that** the mounting spindle (6) is provided with a drive feature (10).

6. Method according to one of the preceding claims, **characterised in that** the mounting spindle (6) is provided with an adjustable depth stop (16) by means of which the mounting depth of the helical wire (2) in the receiving thread (14) may be established.

7. Mounting spindle and helical wire for mounting the helical wire in a receiving thread of a component, of which the mounting spindle (6) comprises a spindle body (8) having a thread which is adapted to the geometry of the helical wire (2) and the helical wire (2) has an end region (4), the internal diameter thereof being reduced relative to that of the remaining region of the helical wire (2), such that it is smaller than the diameter of the mounting spindle (6) in order to secure the helical wire (2) on the mounting spindle (6) by a predetermined frictional connection,
the helical wire (2) having at least one end region (4), the internal diameter thereof being reduced relative to that of the remaining region of the helical wire (2), such that it is smaller than the diameter of the mounting spindle (6), in order to produce the frictional connection required for mounting the helical wire (2), and **characterised in that** the diameter of the mounting spindle (6) is slightly greater than that of a standard screw of substantially similar dimensions which is provided for mounting in the helical wire, and the end region (4) of reduced diameter of the helical wire (2) has an internal diameter which is sufficiently great in order to be able to screw the standard screw into the mounted helical wire (2).

## Revendications

1. Procédé pour monter un insert taraudé sous la forme d'une spirale de fil métallique dans un taraudage de réception d'un élément de construction, présentant les étapes suivantes consistant à:
a) fournir une spirale de fil métallique (2) dont la géométrie est adaptée au taraudage de réception (14) de l'élément de construction (2),
b) fournir une broche de montage (6) avec un filet qui est constitué de manière adaptée à la géométrie de la spirale de fil métallique (2),
c) bloquer la spirale de fil métallique (2) sur la broche de montage (6) par une liaison par adhérence qui est supérieure au moment nécessaire pour le montage de la spirale de fil métallique dans le taraudage de réception,
d) visser la broche de montage (6) avec la spirale de fil métallique (2) bloquée sur elle dans le taraudage de réception (14),
e) enlever la broche de montage (6) de la spirale de fil métallique (2) en tournant la broche de montage à l'envers du sens de vissage,
dans lequel la spirale de fil métallique (2) présente au moins une zone terminale (4) dont le diamètre intérieur est réduit par rapport à celui de la zone restante de la spirale de fil métallique (2) à tel point qu'il est plus petit que le diamètre de la broche de montage (6) pour générer l'adhérence nécessaire pour le montage de la spirale de fil métallique (2), et **caractérisé en ce que**
le diamètre de la broche de montage (6) est légèrement supérieur à celui de la vis normalisée avec des dimensions essentiellement identiques qui est prévue pour le montage dans la spirale de fil métallique, et la zone terminale (4) au diamètre réduit de la spirale de fil métallique (2) présente un diamètre intérieur qui est suffisamment grand pour pouvoir visser la vis normalisée dans la spirale de fil métallique (2) montée.

2. Procédé selon la revendication 1, **caractérisé en ce que** la zone terminale (4) au diamètre réduit de la spirale de fil métallique (2) s'étend sur un angle (α) allant de 360° à 720°.

3. Procédé selon la revendication 1 ou 2, **caractérisé en ce que** la liaison par adhérence entre la broche de montage (6) et la spirale de fil métallique (2) est effective sur leurs flans de filet ou/et leurs sommets de filet.

4. Procédé selon l'une des revendications précédentes, **caractérisé en ce que** la spirale de fil métallique (2) présente à l'état non monté un diamètre extérieur qui est plus grand que le diamètre intérieur du taraudage de réception (14) de l'élément de construction (12) pour assurer un ajustement serré de la spirale de fil métallique (2) dans le taraudage de réception (14).

5. Procédé selon l'une des revendications précédentes, **caractérisé en ce que** la broche de montage (6) est pourvue d'une caractéristique d'entraînement (10).

6. Procédé selon l'une des revendications précédentes, **caractérisé en ce que** la broche de montage (6) est pourvue d'une butée de profondeur (16) réglable, par laquelle la profondeur de montage de la spirale de fil métallique (2) dans le taraudage de réception (14) peut être déterminée.

7. Broche de montage et spirale de fil métallique pour le montage de la spirale de fil métallique dans un taraudage de réception d'un élément de construction, dont la broche de montage (6) présente un corps de broche (8) avec un filet qui est adapté à la géométrie de la spirale de fil métallique (2) et la spirale de fil métallique (2) présente une zone terminale (4) dont le diamètre intérieur est réduit par rapport à celui de la zone restante de la spirale de fil métallique (2) à tel point qu'il est plus petit que le diamètre de la broche de montage (6) pour bloquer la spirale de fil métallique (2) sur la broche de montage (6) par une adhérence prédéfinie,
dans lequel la spirale de fil métallique (2) a au moins une zone terminale (4), dont le diamètre intérieur par rapport à celui de la zone restante de la spirale de fil métallique (2) est réduit à tel point qu'il est plus petit que le diamètre de la broche de montage (6) pour générer l'adhérence nécessaire pour le montage de la spirale de fil métallique (2) et **caractérisé en ce que**
le diamètre de la broche de montage (6) est légèrement plus grand que celui de la vis normalisée avec des dimensions essentiellement identiques qui est prévue pour le montage dans la spirale de fil métallique et la zone terminale (4) au diamètre réduit de la spirale de fil métallique (2) a un diamètre intérieur qui est suffisamment grand pour pouvoir visser la vis normalisée dans la spirale de fil métallique (2) montée.
